# EUROPEAN PATENT SPECIFICATION

(11) **EP 1 634 442 B1**
(45) Date of publication and mention of the grant of the patent: **16.03.2016**
(21) Application number: 04734579.8
(22) Date of filing: 24.05.2004
(51) Int. Cl.: H04N 5/445, H04N 5/782, H04N 7/16, H04N 21/442, H04N 21/45, H04N 21/466, H04N 21/472, H04N 21/482

(54) **TRANSFORMATION OF RECOMMENDER SCORES DEPENDING UPON THE VIEWED STATUS OF TV SHOWS**
UMWALDUNG VON EMPFEHLUNGSWERTEN ABHÄNGIG VON DEM SCHON-BETRACHTETEN ZUSTAND VON FERNSEHPROGRAMMEN
TRANSFORMATION D'EVALUATIONS FOURNIES PAR UNE ENTITE DE RECOMMANDATION EN FONCTION D'UNE EVALUATION SAISIE LORS DU VISIONNEMENT D'EMISSIONS DE TELEVISION

(30) Priority: 30.05.2003 US 474830 P
(43) Date of publication of application: 15.03.2006
(73) Proprietor: Koninklijke Philips N.V., 5656 AE Eindhoven (NL)
(72) Inventor: GUTTA, Srinivas, Briarcliff Manor, NY 10510-8001 (US)
(74) Representative: Damen, Daniel Martijn
(86) International application number: PCT/IB2004/001825
(87) International publication number: WO 2004/107747

(56) References cited:
- EP-A- 1 069 769
- WO-A-02/07433
- WO-A-02/052856
- US-A1- 2002 088 010

## Description

The present invention relates to methods and devices for recommending and recording television programming, and more particularly to a method and device for lowering the recommendation score of a recommended show if the show was previously viewed.

As the number of channels available to television viewers has increased, along with the diversity of the programming content available on such channels, it has become increasingly challenging for television viewers to identify and record television programs of interest. Historically, television viewers identified television programs of interest by analyzing printed television program guides. Typically, such printed television program guides contained grids listing the available television programs by time and date, channel and title.

More recently, a number of tools have been proposed and become available for recommending television programming. The Tivo® system, for example, commercially available from Tivo, Inc., of Sunnyvale, California, allows viewers to rate shows using a "Thumbs Up and Thumbs Down" feature and thereby indicate programs that the viewer likes and dislikes, respectively. Thereafter, the TiVo® receiver matches the recorded viewer preferences with received program data, such as an electronic program guide (EPG), to make recommendations tailored to each viewer. The TiVo® then records the recommended shows on a hard disk for future viewing by the user.

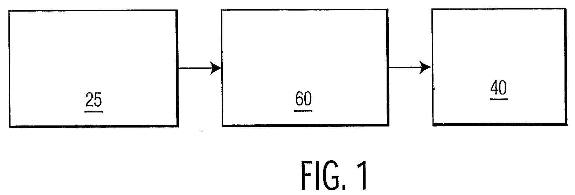

There are typically two types of television recommenders, implicit and explicit. Implicit television program recommenders generate television program recommendations based on information derived from the viewing history of the viewer, in a non-obtrusive manner. Fig. 1 illustrates the generation of a viewer profile 40 using a conventional implicit television program recommender 60. The implicit viewer profile 40 is derived from a viewing history 25, indicating whether a given viewer liked or dislike each program. As shown in Fig 1, the implicit television program recommender 60 processes the viewing history 25, in a known manner, to derive an implicit viewer profile 40 containing a set of inferred rules that characterize the preferences of the viewer. Thus, an implicit television program recommender 60 attempts to derive the viewing habits of the viewer based on the set of programs the viewer liked or disliked.

Explicit television program recommenders, on the other hand, explicitly question viewers about their preferences for the programme attributes, such as title, gene, actors, channel, and date/time to derive viewer profiles and generate recommendations.

One example of a known television programming recommender generates television program recommendations based on a combined implicit/explicit program recommendation score. Thus, the disclosed television programming recommender combines the explicit viewing preference of viewers with their television viewing behaviour to generate program recommendations based on explicit recommendations scores and implicit recommendation scores. In this prior art system, the invention computes a combined recommendation score based on the explicit and implicit scores.

WO02/052856 discloses a method and system for creating program grids which include program preferences. Program preference information is gathered from set top boxes and algorithms are used to determine the best placement of programs in the grid. The preference grid can be updated once a video on demand program has been watched.

US2002/0088010 discloses a method and system whereby production data used to produce programs may be processed to generate metadata for individual segments of the program and to distribute the metadata to consumers in advance of showing of the program. The user can then provide a response to the metadata received to indicate whether they would be interested in watching the program.

EP1069769 discloses a system which allows a visual indication to be generated to a user of the system to inform them that a program which they select to watch has previously been viewed by them. The system includes a database which stores data relating to programs viewed by a user so that a comparison can be made with newly selected programs for viewing.

The problem with all the present recommenders described is that shows are recommended without regard to whether or not they have been previously viewed.

Accordingly, there is a need to take into account, when recommending shows for viewing or recording, whether or not the viewer has already seen the show.

According to a first aspect of the present invention there is provided a device for recommending programs, comprising;
a recommender which recommends programs and provides a recommender score indicating the degree of match of a program description with at least one user profile;
a storage device for storing on a storage medium a list of previously viewed programs;
a recommender score reducer which reduces the recommender score of a program if the program is represented in the storage medium as previously viewed; and wherein the program is recommended if the recommender score remains above a threshold after being reduced by the recommender score reducer, characterised in that the recommender score reducer is reduced by a constant value and this value is determined by considering each of the following factors i) the program was previously viewed in its entirety, ii) the program was previously at least partially viewed, and iii) the program was recently viewed.

Preferably the storage device stores the reduced recommender score and provides to a display the title of the recommended program along with its reduced recommender score.

According to a further aspect of the present invention there is provided a method of recommending programs, comprising;
providing and storing a recommender score indicating the degree of match of a program description with at least one user profile;
storing on a storage medium a list of previously viewed programs;
reducing the recommender score of a program if the program is represented in the storage medium as previously viewed; and
recommending the program if the recommender score remains above a threshold after being reduced, characterised in that the recommender score is reduced by a constant value and this value is determined by considering each of the following factors:
   i) the program was previously viewed in its entirety, ii) the program was previously at least partially viewed, and iii) the program was recently viewed.

Preferably the method includes the step of providing to a display the title of the recommended program along with its reduced recommender score.

Preferably the method includes the step of recording the recommended program.

Generally, a television recommender and /or recording method and device are described wherein if a user has seen a particular show or a set of shows and if these shows are currently available or will be available, then in such a case the recommender recommends these shows with a lower priority. The invention may be incorporated in software and the system may make a note of the day, time current recommender score, how much was watched of the recommended show, with whom it was watched etc. Once the system has this information then the recommender can determine whether the show was previously viewed in its entirety or partially viewed and then adjust the recommender score accordingly.

In another embodiment the recommender can lower the recommender score depending upon how far back the show was seen or with whom it was watched. The recommender can also determine how much of the show was viewed. If the viewer only watched a portion of the show, the recommender could determine that the show should be recommended again or it could decide that the viewer watched it but didn't like it enough to finish it.

In other embodiments the combination of the above can be used to adjust the recommender score.

A more complete understanding of the invention as well as further features and advantages of the present invention will be obtained by reference to the following detailed description and drawings.
Fig 1 shows an implicit recommender system in accordance with the prior art.
Fig 2 shows a recommender/ recording system in accordance with an embodiment of the invention.
Fig 3 shows a flow chart describing the program recommendation generation process of program recommendations in accordance with a preferred embodiment of the invention.

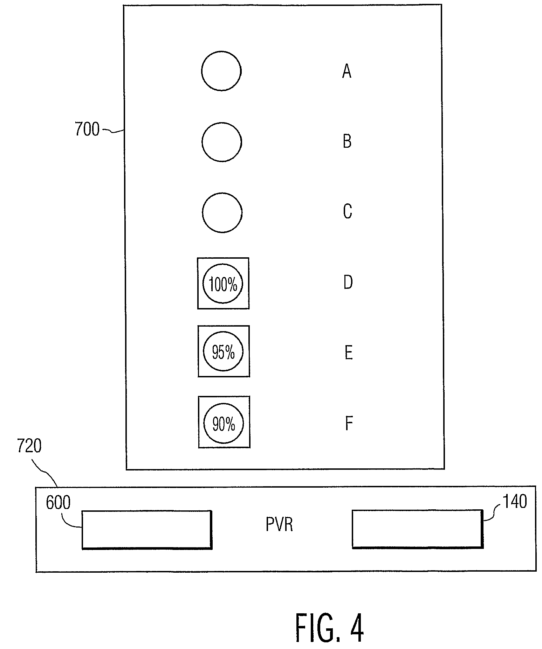

Fig. 4 shows a personal video recorder in accordance with the present invention

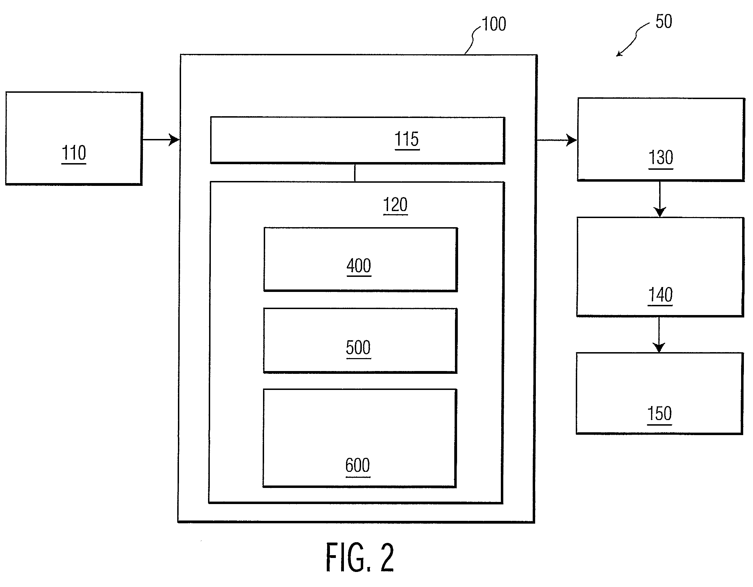

Fig. 2 illustrates a television programming recommender/storage system 50 in accordance with the present invention. As shown in Fig. 2, the television programming recommender 100 evaluates each of the programs in an electronic programming guide (EPG) 110 to identify programs of interest to a particular viewer, for example, using a set-top terminal/television (not shown) using well-known on-screen presentation techniques.

The television program recommender 100 uses processor 115 to generate television program recommendation score stored in memory 120. This recommender combines the explicit viewing preferences of viewers with their television viewing behaviour (implicit preferences) to generate program recommendations. Generally, each viewer initially rates their preferences for various program descriptions or attributes, including, for example, days and viewing times, channels, actors, and categories (genres) of television programs. An explicit viewer profile is created in 400. An implicit profile 500 is also generated and applied to each program. A combined recommendation score is produced for each program at 600. If the recommendation score is above a certain threshold the program is recommended at 130.

The system also stores a list or history of shows 140 previously viewed by the user. The system then looks at the history of previously viewed programs 140 to determine if the program being recommended was previously viewed. If the show was previously viewed then a plurality of different modifications to the recommender score may occur.

If the recommended show was previously viewed in its entirety, then the recommender score of the show is lowered by a constant factor. For example if the threshold for determining whether a program is recommended is set at 85%, meaning the program's description matches by 85% or more with the user's profile, then only the programs having a recommender score above 85% are recommended. If a current show has a recommender score of 87% but it was previously viewed, the recommender score may be lowered by 12%, making the new recommender score 73% and the show is no longer recommended. Alternatively if the recommender score is 100% and previously viewed shows are only reduced by 12% then the show will still be recommended but with a lower priority.

In an alternate embodiment, if the history of previously viewed shows determines that only a portion of the recommended show was watched, then the recommender score may be lowered by only 7% making the assumption that the viewer saw a portion of the show but may have been interrupted and therefore may want to see this show again so that he can finish viewing it. Accordingly, a highly recommended show will still be recommended in such a case but a show with a lower recommender score may not be. There are many known ways of determining how much of a program was previously viewed, such as monitoring channel changes to see if the viewer changed the channel and never returned to the channel to continue watching, alternatively if the viewer was watching a recorded version of the program the video recorder can monitor how much of the recording was viewed.

The history of the previously viewed shows 140, can have an input of the EPG and may store the day, time, current recommender score, how much of the show was viewed, with whom the show was viewed etc. This will enable the system to determine if the show was previously viewed, how much was seen, how long ago the show was seen and perhaps with whom it was watched.

Accordingly, in another embodiment, if a show is recommended at a high priority, for example 98%, but the show was already viewed by the viewer the day before, the recommender score may be lowered by 20% making it fall below the threshold of recommended shows.

Table 1 shows examples of recommender score reductions based on various factors. The assumption is that the recommender threshold must be met before a show is recommended. Assume a recommender level between 1 and 100, although the combined recommendation score can take many forms. The recommender score can be a numerical value such as from -1..1 or it can be a percentage value or other values. It typically represents the degree to which a recommended show matches a user profile. Assume a recommender threshold of 85% match with the user profile. If a show is only recommended if its recommender score is above the threshold of 85% then in a preferred embodiment Table 1 shows reduction of the recommender output based on various factors.

| Criteria for Reduction | Recommender reduction |
|---|---|
| Program was previously viewed | 12% point reduction |
| Program was partially viewed | 7% point reduction |
| Program was previously viewed more than 6 months | Add 10% making it no reduction for the previously viewed program |
| The same people are viewing these recommended programs | 2% more point reduction |
| Different people are viewing these recommended programs | Add 10% points making it a 0 point reduction for the previously viewed program |

Many known systems can determine if a viewer whose profile is being used to recommend a show is the same viewer that previously viewed the show. For example, in some systems each time a viewer watches the television he/she must enter an ID number. The ID number indicates the identity of the viewer. Alternatively, a system is known in which a camera is mounted on the television and detects, using face recognition, the viewers currently in the room.

The television program recommender 100 may be embodied as any computing device, such as a personal computer or workstation, that contains a processor 115, such as a central processing unit (CPU), and memory 120, such as RAM and ROM. In addition, the television programming recommender 100 may be embodied as any available television program recommender, such as the TiVo system, or the television program recommenders described in U.S. Patent No. 6,727,914, filed December 17, 1999, entitled "METHOD AND APPARATUS FOR RECOMMENDING TELEVISION PROGRAMMING USING DECISION TREES", and U.S. Patent No. 7,051,352, filed Feb. 4, 2000 entitled "BAYESIAN TV SHOW RECOMMENDER", or any combination thereof, as modified herein to carry out the features and functions of the present invention.

Similarly the program recommendations 130, history 140 and new program recommendations 150 can also be part of the computer, workstation, recommender or PVR. In general the system will use software which is part of the recommender to carry out the program steps to reduce the recommender scores, but one skilled in the art will also realize that the system can be implemented using hardware, hardware in conjunction with software, and software that is not stored locally.

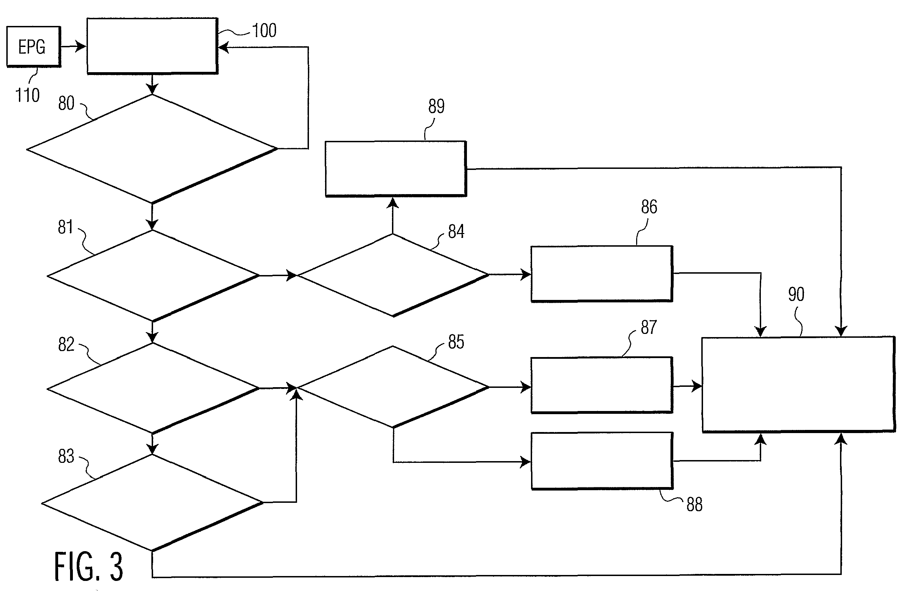

Fig.3 shows a flow chart of a recommendation system in accordance with an embodiment of the invention. The television programs or the television program information is sent to the TV recommender 100 which determines the recommender score. This recommender score is then compared to a threshold at 80 to determine if the program should be recommended. If the program is not recommended then the TV recommender searches for another program to recommend. If the program recommender score is above the threshold it is then determined if the program that is being recommended has been recently viewed in its entirety 81. If it was not recently viewed in its entirety then it determines if it was viewed partially at 82. If the program was not viewed partially recently, it then determines if it was viewed more than 6 months ago. If the system does not detect a viewing more than 6 months ago the system recommends the program 90 without adjusting the recommender score.

If the program was recently viewed in its entirety 81, the system determines if the people who viewed the show recently are the same people watching the television at this time. If it is the same people then the recommender score is decreased (86) by 12% and the program title is displayed with the reduced recommender score 90. The system can also be configured such that if the reduction in recommender score causes the score to fall below the threshold then the program is not recommended at all. If the same people are not currently viewing the recommender list then the score may only decrease by 10% (89) and the program title is displayed 90.

If the recommended program was only recently viewed partially 82 the system may again determine if the same people are viewing the current recommendations 85 and decrease the score by 7% (87) if they are, and only by 5% if they are different viewers. These programs are then displayed at 90.

If the recommended program was previously viewed but it was more than 6 months since this viewing took place then the system may again determine if it is the same people watching 85, and decrease 87 or increase 88 the score accordingly before display of the recommendation.

It should be noted that the system does not necessarily have to determine if the same people were watching the program and it can be imagined that in some systems if the program was previously viewed whether partially or in its entirety a viewer may not want that program to appear on the recommended list.

Fig. 3 shows a Personal Video Recorder (PVR) 720 such as a TiVo connected to a television 700. The PVR includes a recommender 600 and a history 140. The "Now Showing" screen of a Tivo displays all of the programs currently stored on the hard disk. In this case they are Programs A-F. Many of these programs were selected to be specifically recorded by the viewer (such as Programs A-C). The other programs are recommender programs as shown by the square surrounding the circle. Inside the circle is either the recommender score which takes into account the factors shown in Table 1 or they may be color coded to indicate priority.

It should also be noted that the reduction of the recommendation score could take the form of lowering the priority of the recommendation on the display rather than an actual numerical reduction.

While there has been shown and described what is considered to be preferred embodiments of the invention, it will, of course, be understood that various modifications and changes in form or detail could readily be made without departing from the claimed invention.

## Claims

1. A device for recommending programs, comprising;
a recommender (100) which recommends programs and provides a recommender score (600) indicating the degree of match of a program description with at least one user profile;
a storage device (120) for storing on a storage medium a list of previously viewed programs (140);
a recommender score reducer which reduces the recommender score of a program if the program is represented in the storage medium as previously viewed; and wherein the program is recommended if the recommender score remains above a threshold (80) after being reduced by the recommender score reducer (130), **characterised in that** the recommender score
reducer is reduced by a constant value and this value is determined by considering each of the following factors i) the program was previously viewed in its entirety (81), ii) the program was previously at least partially viewed (82),and iii) the program was recently viewed (90).

2. The device as claimed in claim 1, wherein the storage medium (120) stores a list of previously viewed programs (140) including the date of prior viewing.

3. The device as claimed in claim 1, wherein the storage medium (120) stores an indication of the length of time the program was previously viewed.

4. The device as claimed in claim 1, wherein the storage medium (120) stores an identification of the viewer who previously viewed the program.

5. The device as claimed in claim 1 wherein the storage device (120) stores the reduced recommender score and provides to a display the title of the recommended program along with its reduced recommender score.

6. The device as claimed in claim 1 wherein the device is a recording device for recording recommended programs.

7. A method of recommending programs, comprising; providing and storing a recommender score (600) indicating the degree of match of a program description with at least one user profile;
storing on a storage medium (120) a list of previously viewed programs (140);
reducing the recommender score of a program if the program is represented in the storage medium as previously viewed (130);
and recommending the program if the recommender score remains above a threshold after being reduced, **characterised in that** the recommender score is reduced by a constant value and this value is determined by considering each of the following factors:
i) the program was previously viewed in its entirety (81), ii) the program was previously at least partially viewed (82), and iii) the progran1 was recently viewed (90).

8. The recommending method as claimed in claim 7, wherein the step of storing a list of previously viewed programs includes a step of storing the date of prior viewing.

9. The recommending method as claimed in claim 7, wherein the step of storing a list of previously viewed programs includes a step of storing an indication of the length of time the program was previously viewed.

10. The recommending method as claimed in claim 7, wherein the step of storing a list of previously viewed programs includes a step of storing an identification of the viewer who previously viewed the program.

11. The recommending method as claimed in claim 7 including the step of providing to a display the title of the recommended program along with its reduced recommender score.

12. The recommending method as claimed in claim 7 including the step of recording the recommended program.

## Patentansprüche

1. Einrichtung zur Empfehlung von Programmen, umfassend:
einen Recommender (100), der Programme empfiehlt und eine Recommender-Bewertung (600) vorsieht, die den Grad der Übereinstimmung einer Programmbeschreibung mit mindestens einem Benutzerprofil anzeigt;
eine Speichereinrichtung (120), um auf einem Speichermedium eine Liste zuvor angesehener Programme (140) zu speichern;
einen Recommender-Bewertungsreduzierer, der die Recommender-Bewertung eines Programms reduziert, wenn das Programm in dem Speichermedium als zuvor angesehen betrachtet wird; und wobei das Programm empfohlen wird, wenn die Recommender-Bewertung nach Reduzierung durch den Recommender-Bewertungsreduzierer (130) über einem Schwellenwert (80) bleibt, **dadurch gekennzeichnet, dass**
der Recommender-Bewertungsreduzierer um einen konstanten Wert reduziert wird und dieser Wert unter Berücksichtigung von jedem der folgenden Faktoren ermittelt wird:
i) das Programm wurde zuvor in seinem vollen Umfang angesehen (81),
ii) das Programm wurde zuvor zumindest teilweise angesehen (82), und
iii) das Programm wurde kürzlich angesehen (90).

2. Einrichtung nach Anspruch 1, wobei das Speichermedium (120) eine Liste von zuvor angesehenen, einschließlich des Datums von zuvor angesehenen Programmen (140) speichert.

3. Einrichtung nach Anspruch 1, wobei das Speichermedium (120) eine Angabe der Länge der Zeit, in der das Programm zuvor angesehen wurde, speichert.

4. Einrichtung nach Anspruch 1, wobei das Speichermedium (120) eine Identifikation des Betrachters speichert, der das Programm zuvor angesehen hat.

5. Einrichtung nach Anspruch 1, wobei die Speichereinrichtung (120) die reduzierte Recommender-Bewertung speichert und einem Display den Titel des empfohlenen Programms zusammen mit seiner reduzierten Recommender-Bewertung zuführt.

6. Einrichtung nach Anspruch 1, wobei die Einrichtung eine Aufzeichnungseinrichtung zur Aufzeichnung empfohlener Programme ist.

7. Verfahren zum Empfehlen von Programmen, wonach
eine Recommender-Empfehlung (600) vorgesehen und gespeichert wird, die den Grad der Übereinstimmung einer Programmbeschreibung mit mindestens einem Benutzerprofil anzeigt;
auf einem Speichermedium (120) eine Liste zuvor angesehener Programme (140) gespeichert wird;
die Recommender-Bewertung eines Programms reduziert wird, wenn das Programm in dem Speichermedium als zuvor angesehen betrachtet wird (130);
und das Programm empfohlen wird, wenn die Recommender-Bewertung nach Reduzierung über einem Schwellenwert bleibt, **dadurch gekennzeichnet, dass** die Recommender-Bewertungs um einen konstanten Wert reduziert wird und dieser Wert unter Berücksichtigung von jedem der folgenden Faktoren ermittelt wird:
i) das Programm wurde zuvor in seinem vollen Umfang angesehen (81),
ii) das Programm wurde zuvor zumindest teilweise angesehen (82) und
iii) das Programm wurde kürzlich angesehen (90).

8. Empfehlungsverfahren nach Anspruch 7, wobei der Schritt des Speicherns einer Liste von zuvor angesehenen Programmen einen Schritt des Speicherns des Datums der vorherigen Betrachtung umfasst.

9. Empfehlungsverfahren nach Anspruch 7, wobei der Schritt des Speicherns einer Liste von zuvor angesehenen Programmen einen Schritt des Speicherns einer Angabe der Zeitdauer, in der das Programm zuvor angesehen wurde, umfasst.

10. Empfehlungsverfahren nach Anspruch 7, wobei der Schritt des Speicherns einer Liste von zuvor angesehenen Programmen einen Schritt des Speicherns einer Identifikation des Betrachters umfasst, der das Programm zuvor angesehen hat.

11. Empfehlungsverfahren nach Anspruch 7, das den Schritt des Zuführens des Titels des empfohlenen Programms zusammen mit seiner reduzierten Recommender-Bewertung zu einem Display umfasst.

12. Empfehlungsverfahren nach Anspruch 7, das den Schritt des Aufzeichnens des empfohlenen Programms umfasst.

## Revendications

1. Dispositif pour recommander des programmes, comprenant :
un dispositif de recommandation (100) qui recommande des programmes et fournit un résultat de dispositif de recommandation (600) indiquant le degré de correspondance d'une description de programme avec au moins un profil utilisateur ;
un dispositif de stockage (120) pour stocker, sur un support de stockage, une liste de programmes regardés auparavant (140) ;
un dispositif de réduction de résultat de dispositif de recommandation qui réduit le résultat de dispositif de recommandation d'un programme si le programme est représenté dans le support de stockage comme ayant été regardé auparavant ; et
dans lequel le programme est recommandé si le résultat de dispositif de recommandation reste supérieur à un seuil (80) après avoir été réduit par le dispositif de réduction de résultat de dispositif de recommandation (130), **caractérisé en ce que** le dispositif de réduction de résultat de dispositif de recommandation est réduit selon une valeur constante et cette valeur est déterminée en considérant chacun des facteurs suivants
i) le programme a été regardé auparavant dans sa totalité (81),
ii) le programme a été auparavant au moins partiellement regardé (82),et
iii) le programme a été récemment regardé (90).

2. Dispositif selon la revendication 1, dans lequel le support de stockage (120) stocke une liste de programmes regardés auparavant (140) incluant la date de visionnement précédent.

3. Dispositif selon la revendication 1, dans lequel le support de stockage (120) stocke une indication de la durée pendant laquelle le programme a été regardé auparavant.

4. Dispositif selon la revendication 1, dans lequel le support de stockage (120) stocke une identification du téléspectateur qui a regardé le programme auparavant.

5. Dispositif selon la revendication 1, dans lequel le dispositif de stockage (120) stocke le résultat réduit de dispositif de recommandation et fournit, à un affichage, le titre du programme recommandé conjointement avec son résultat réduit de dispositif de recommandation.

6. Dispositif selon la revendication 1, dans lequel le dispositif est un dispositif d'enregistrement pour enregistrer des programmes recommandés.

7. Procédé de recommandation de programmes, comprenant :
la fourniture et le stockage d'un résultat de dispositif de recommandation (600) indiquant le degré de correspondance d'une description de programme avec au moins un profil utilisateur ;
le stockage sur un support de stockage (120) d'une liste de programmes regardés auparavant (140) ;
la réduction du résultat de dispositif de recommandation d'un programme si le programme est représenté dans le support de stockage comme ayant été regardé auparavant (130) ;
et la recommandation du programme si le résultat de dispositif de recommandation reste supérieur à un seuil après avoir été réduit, **caractérisé en ce que** le résultat de dispositif de recommandation est réduit selon une valeur constante et cette valeur est déterminée en considérant chacun des facteurs suivants :
i) le programme a été regardé auparavant dans sa totalité (81),
ii) ii) le programme a été auparavant au moins partiellement regardé (82), et
iii) le programme a été récemment regardé (90).

8. Procédé de recommandation selon la revendication 7, dans lequel l'étape du stockage d'une liste de programmes regardés auparavant inclut une étape du stockage de la date de visionnement précédent.

9. Procédé de recommandation selon la revendication 7, dans lequel l'étape du stockage d'une liste de programmes regardés auparavant inclut une étape du stockage d'une indication de la durée pendant laquelle le programme a été regardé auparavant.

10. Procédé de recommandation selon la revendication 7, dans lequel l'étape du stockage d'une liste de programmes regardés auparavant inclut une étape du stockage d'une identification du téléspectateur qui a regardé le programme auparavant.

11. Procédé de recommandation selon la revendication 7, incluant l'étape de la fourniture à un affichage du titre du programme recommandé conjointement avec son résultat réduit de dispositif de recommandation.

12. Procédé de recommandation selon la revendication 7, incluant l'étape de l'enregistrement du programme recommandé.
